# EUROPEAN PATENT APPLICATION

(11) **EP 4 351 124 A1**
(43) Date of publication of application: **10.04.2024**
(21) Application number: 22814760.9
(22) Date of filing: 25.02.2022
(51) Int. Cl.: H04N 5/225, A47L 11/40

(54) **LINE LASER MODULE AND SELF-MOVING DEVICE**

(30) Priority: 02.06.2021 CN 202110615607
(71) Applicant: Beijing Roborock Technology Co., Ltd., Beijing 102206 (CN)
(72) Inventor: YU, Guang, Beijing 102206 (CN); LONG, Yongji, Beijing 102206 (CN); LIU, Dan, Beijing 102206 (CN)
(74) Representative: Michalski Hüttermann & Partner Patentanwälte mbB
(86) International application number: PCT/CN2022/077855
(87) International publication number: WO 2022/252712

(57) **Abstract**

The present application relates to the technical field of smart terminals. Disclosed are a line laser module and a self-moving device. The line laser module comprises: a body portion; a first image collection assembly, which is arranged on the body portion, and comprises a first camera, at least one laser transmission apparatus and a first image processing module, wherein the laser transmission apparatus is arranged near the first camera and is configured to transmit, to the outside of the body portion, a line laser having a linear projection, the first camera is configured to collect a first environment image that includes the line laser, and the first image processing module is configured to acquire obstacle distance information according to the first environment image; and a second image collection assembly, which comprises a second camera and a second image processing module, wherein the second camera is configured to collect a second environment image, and the second image processing module is configured to acquire obstacle type information according to the second environment image.

## Description

### CROSS-REFERENCE TO RELATED APPLICATION

This application is based on and claims priority to Chinese Patent Application No. 202110615607.0, filed on June 2, 2021 and entitled "LINEAR LASER MODULE AND SELF-MOVING DEVICE", the disclosure of which is incorporated herein by reference in its entirety.

### TECHNICAL FIELD

Embodiments of the present disclosure relate to a linear laser module and a self-moving device.

### BACKGROUND

Self-moving devices such as cleaning robots can automatically perform operations such as cleaning, mopping, and vacuuming, and thus, have been widely used. During a cleaning process, the self-moving device detects obstacles that may be encountered in a current operation path in real time, and performs a corresponding obstacle avoidance operation. However, the current self-moving devices have low accuracy in identifying obstacles, and fail to avoid these obstacles accurately.

It should be noted that the information disclosed in the background section is merely for strengthening the understanding of the background of the present disclosure, and may therefore include information that does not constitute the prior art known to those of ordinary skills in the art.

### SUMMARY

According to one aspect of the present disclosure, a linear laser module is provided. The linear laser module includes:
a main body;
a first image acquisition assembly, disposed on the main body and including a first camera, at least a pair of laser emission apparatuses, and a first image processing module, where the pair of laser emission apparatuses are disposed on both sides of the first camera and configured to emit a linear laser, having a linear projection, outwards from the main body, the first camera is configured to acquire a first ambient image including the linear laser, and the first image processing module is configured to acquire obstacle distance information according to the first ambient image; and
a second image acquisition assembly, including a second camera and a second image processing module, where the second camera is configured to acquire a second ambient image, and the second image processing module is configured to acquire obstacle type information according to the second ambient image.

In an exemplary embodiment of the present disclosure, the first image processing module acquires the obstacle distance information based on a triangulation ranging method.

In an exemplary embodiment of the present disclosure, the second image processing module includes:
a feature extraction module, configured to perform feature extraction on the second ambient image to acquire feature information, and
an identification module, configured to input the feature information into a pre-trained obstacle identification model to identify the obstacle type information.

In an exemplary embodiment of the present disclosure, the second image processing module further includes:
a training module, configured to generate the obstacle identification model by using acquired training data.

In an exemplary embodiment of the present disclosure, the laser emission apparatus is configured to emit infrared light; the first camera is an infrared camera; and the second camera is an RGB camera.

In an exemplary embodiment of the present disclosure, the first image acquisition assembly further includes:
a first filter lens, disposed on a side of the first camera away from the main body, the first filter lens being configured such that only infrared light enters the first camera; and
the second image acquisition assembly further includes:
   a second filter lens, disposed on a side of the second camera away from the main body, the second filter lens being configured such that only visible light enters the second camera.

In an exemplary embodiment of the present disclosure, the main body includes a first end and a second end as well as a connection portion connecting the first end and the second end; and
the pair of laser emission apparatuses are disposed on the first end and the second end, respectively; and the first camera and the second camera are disposed on the connection portion.

In an exemplary embodiment of the present disclosure, the linear laser module further includes:
a return-to-pile positioning apparatus, disposed on the main body, where the return-to-pile positioning apparatus is configured to communicate with a charging pile.

In an exemplary embodiment of the present disclosure, the return-to-pile positioning apparatus includes an infrared emission apparatus and at least two infrared reception apparatuses, the infrared emission apparatus being configured to transmit an infrared signal to the charging pile, and the at least two infrared reception apparatuses being configured to receive an infrared signal from the charging pile.

In an exemplary embodiment of the present disclosure, the first image acquisition assembly and the second image acquisition assembly are connected to a master control unit, and the master control unit is configured to transmit operation instructions to the first image acquisition assembly and the second image acquisition assembly.

In an exemplary embodiment of the present disclosure, each of the laser emission apparatuses include:
a linear laser generator, configured to generate a linear laser; and
a laser drive circuit, connected to the master control unit, the laser drive circuit being configured to control the linear laser generator based on the operation instructions transmitted by the master control unit.

In an exemplary embodiment of the present disclosure, the laser drive circuit includes:
a first amplification circuit, configured to receive a control signal transmitted by the master control unit, amplify the control signal, and transmit the amplified control signal to the laser generator to control the on or off state of the laser generator; and
a second amplification circuit, configured to receive a regulation signal transmitted by the master control unit, amplify the regulation signal, and transmit the amplified regulation signal to the laser generator to control the generation power of the linear laser generator.

In an exemplary embodiment of the present disclosure, an optical axis of the first camera intersects downward with a horizontal direction, and an optical axis of the second camera intersects upward with the horizontal direction.

In an exemplary embodiment of the present disclosure, the optical axis of the first camera has an included angle of 7 degrees with respect to the horizontal direction, and the optical axis of the second camera has an included angle of 5 degrees with respect to the horizontal direction.

According to one aspect of the present disclosure, a self-moving device is provided. The self-moving device includes:
a device body;
the linear laser module described in any of the above embodiments, the linear laser module being disposed on the device body; and
a device control module, configured to control movement of the self-moving device according to the obstacle distance information and the obstacle type information.

In an exemplary embodiment of the present disclosure, the self-moving device further includes:
a buffer component, disposed on the sides of the first and second image acquisition assemblies away from the main body, where the buffer component have openings facing the first image acquisition assembly and the second image acquisition assembly, respectively; and
the buffer component is provided with fill-in lights located on peripheries of the openings.

It should be understood that both the general description above and the detailed description below are exemplary and explanatory only, and are not intended to limit the present disclosure.

### BRIEF DESCRIPTION OF THE DRAWINGS

The accompanying drawings, which are incorporated into and constitute a part of this specification, illustrate embodiments conforming to the present disclosure and, together with the description, serve to explain the principles of the present disclosure. It is noted that the accompanying drawings in the following description are only some embodiments of the present disclosure, and those of ordinary skills in the art may still derive other drawings from these accompanying drawings without creative efforts.
FIG 1 is a partially schematic structural diagram of a linear laser module according to an optional embodiment of the present disclosure;
FIG 2 is a schematic structural diagram of a linear laser module according to another optional embodiment of the present disclosure;
FIG 3 is a partially schematic structural diagram of a buffer component according to an optional embodiment of the present disclosure;
FIG 4 is a schematic diagram of an operation principle of a linear laser generator according to an optional embodiment of the present disclosure;
FIG 5 is a schematic diagram of a relationship between a linear laser generator and a field-of-view angle of a first camera according to an optional embodiment of the present disclosure;
FIG 6 is a partially schematic structural diagram of a main body according to an optional embodiment of the present disclosure;
FIG 7 is a partially schematic structural diagram of a main body according to another optional embodiment of the present disclosure;
FIG 8 is a block diagram of a linear laser module according to an optional embodiment of the present disclosure; and
FIG 9 is a block diagram of a linear laser module according to another optional embodiment of the present disclosure.

### DETAILED DESCRIPTION

Exemplary embodiments will now be described more fully with reference to the accompanying drawings. However, these exemplary embodiments may be implemented in a variety of forms and should not be understood as being limited to the embodiments described herein. On the contrary, these embodiments are provided to make the present disclosure comprehensive and complete, and to fully convey the conception of the exemplary embodiments to those skilled in the art. Identical reference signs in the drawings represent identical or similar structures, and their detailed description will be omitted accordingly. In addition, the drawings are only schematic illustrations of the present disclosure and are not necessarily drawn to scale.

The terms "a", "an", "the", "said", and "at least one" are used to indicate the presence of one or more elements or components, etc. The terms "comprise" and "have" are used to indicate a non-exclusive inclusion, and refer to the possible presence of additional elements or components, etc., in addition to the listed elements or components, etc. The terms "first", "second", etc. are used only as labels, not as a limit to the number of objects thereof.

At least one embodiment of the present disclosure provides a linear laser module, which is applicable to a self-moving device. At least one embodiment of the present disclosure further provides a self-moving device, which includes the aforementioned linear laser module. In an embodiment of the present disclosure, the self-moving device is an intelligent cleaning device, such as a cleaning robot, a mopping robot, a floor polishing robot, or a weeding robot. For the convenience of description, the technical solutions of the present disclosure are described in the embodiments by taking the cleaning robot as an example.

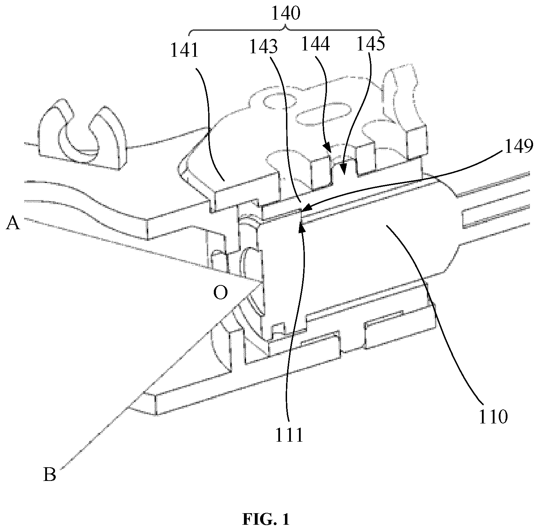

As shown in FIG. 1 to FIG. 5, in an optional embodiment of the present disclosure, a self-moving device may include: a device body 200, a sensing system, a device control module, a drive system, a cleaning system, an energy system, a human-computer interaction system, etc. These systems coordinate with each other to enable the self-moving device to move autonomously for a cleaning function. The above systems in the self-moving device are integrated in the device body 200.

The device body 200 has a roughly circular shape (both the front side and the rear side are circular), and may also have other shapes, including, but not limited to, a roughly D-shaped form, in which case the front side is square and the rear side is circular. The sensing system includes a linear laser module located above or laterally on the device body 200. The device control module is connected to the linear laser module, and controls the function of the self-moving device according to a sensing result of the linear laser module.

In an embodiment of the present disclosure, the linear laser module is not limited to be located at a specific position on the device body 200. For example, the specific position may be, but is not limited to, the front side, rear side, left side, right side, top, middle, bottom, and other parts of the device body 200. Further, the linear laser module is disposed at a middle position, a top position, or a bottom position in a height direction of the device body 200.

In some embodiments of the present disclosure, the self-moving device moves forward to perform a job task. In order to better detect the ambient information ahead, the linear laser module is disposed on the front side of the device body 200, and the front side is the side to which the device body 200 is oriented during the forward movement of the self-moving device.

In some embodiments of the present disclosure, the self-moving device may further include a charging pile adapted to be connected to or disconnected from the device body 200. For example, the device body 200, when in need of charging, is docked with the charging pile for charging, and the device body 200, when used for cleaning, is disconnected from the charging pile for a cleaning operation. The charging pile includes an infrared emission apparatus configured to emit infrared signals, such as near-field infrared signals. The linear laser module further includes a return-to-pile positioning apparatus 190 in a communication connection with the charging pile. It can be understood that the return-to-pile positioning apparatus 190 is disposed on the main body 140, and the return-to-pile positioning apparatus 190 is configured to receive the infrared signals emitted by the charging pile.

In some embodiments of the present disclosure, the linear laser module includes a return-to-pile positioning apparatus 190. When the device body 200 in which the linear laser module is installed is about to return for charging, the device control module controls the return-to-pile positioning apparatus 190 to search for infrared signals near the charging pile; and when the return-to-pile positioning apparatus 190 receives an infrared signal, the device body 200 is guided, according to the infrared signal, to dock with the charging pile. Further, the return-to-pile positioning apparatus 190 further includes an infrared emission apparatus 150 configured to emit infrared signals. When the device body 200 and the charging pile are successfully docked, the device control module controls the infrared emission apparatus 150 to emit infrared signals to the charging pile, thereby charging the device body 200.

For example, the return-to-pile positioning apparatus 190 includes an infrared reception apparatus 160 and an infrared emission apparatus 150. The infrared reception apparatus 160 is configured to receive infrared signals, and the infrared emission apparatus 150 is configured to emit infrared signals. In some embodiments of the present disclosure, the infrared reception apparatus 160 and the infrared emission apparatus 150, as well as the first camera 120, the second camera 130, and the linear laser emission apparatus 110, are all disposed on the main body 140, allowing a modular design of the sensing system, which is convenient to assemble and repair.

Further, the infrared reception apparatus 160 of the return-to-pile positioning apparatus 190 includes at least two infrared detectors, which are evenly arranged on the top of the device body in a transverse direction of the device body. Such an arrangement is conducive to ensuring the reliability of the infrared reception apparatus 160 for receiving near-field infrared signals, and ensuring the reliability of the communication connection between the device body 200 and the charging pile. In some embodiments of the present disclosure, the infrared reception apparatus may include any number of infrared detectors. The infrared emission apparatus 150 of the return-to-pile positioning apparatus 190 includes at least one infrared light. It can be understood that the infrared reception apparatus 160 and the infrared emission apparatus 150 may also be disposed at other positions that meet the requirements, and the present disclosure does not make specific limitations thereto.

In some embodiments of the present disclosure, the device control module is configured to control the movement of the self-moving device according to obstacle distance information and obstacle type information. The obstacle distance information represents a distance of an obstacle from the self-moving device. The device control module may be directly connected to a master control unit 003, and may directly acquire the obstacle distance information and the obstacle type information obtained after the master control unit 003 processes a first ambient image and a second ambient image. Alternatively, the device control module may also be connected to the master control unit 003 by means of a memory, in which the obstacle distance information and the obstacle type information obtained by the master control unit 003 may be stored, and the device control module may directly call the obstacle distance information and the obstacle type information stored in the memory.

In some embodiments of the present disclosure, the device control module and the master control unit 003 may be two independent circuits. For example, the device control module and the master control unit 003 may be two independent chips. In some embodiments of the present disclosure, the device control module and the master control unit 003 may be integrated in the same circuit. For example, the device control module and the master control unit 003 may be integrated in the same chip. The type of the chip is not specially limited here as long as it can fulfill its functions.

In some embodiments of the present disclosure, the device body 200 may also be provided with a moving mechanism such as rollers and crawlers, and the device control module may control the moving mechanism to implement the movement of the self-moving device.

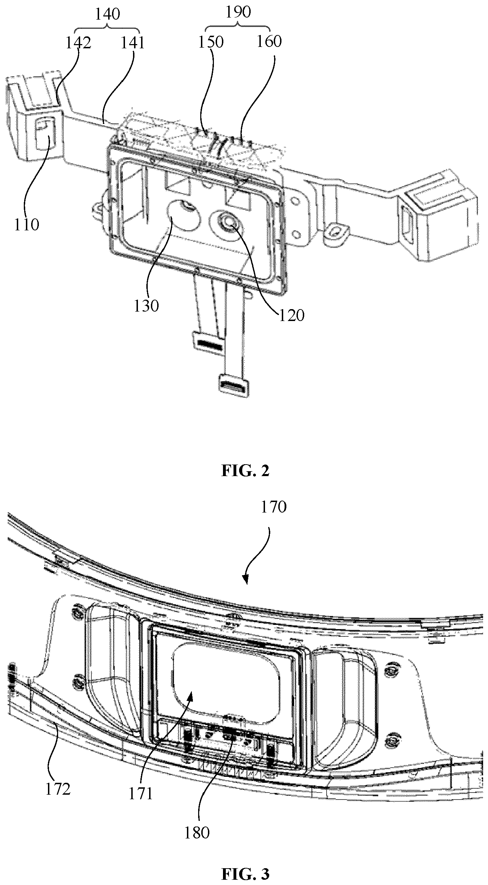

In some embodiments of the present disclosure, as shown in FIG. 3, the self-moving device further includes a buffer component 170 disposed at the front side of the device body 200, and the linear laser module is located between the buffer component 170 and the device body 200. That is, the first camera 120, the second camera 130, the linear laser emission apparatus 110, and the return-to-pile positioning apparatus 190 are located between the buffer component 170 and the device body 200, such that the buffer component 170 provides certain protection to the first camera 120, the second camera 130, the linear laser emission apparatus 110, and the return-to-pile positioning apparatus 190, thereby protecting the first camera 120, the second camera 130, the linear laser emission apparatus 110, and the return-to-pile positioning apparatus against damages by external forces, and advantageously prolonging the service lives of the first camera 120, the second camera 130, the linear laser emission apparatus 110, and the return-to-pile positioning apparatus 190. The buffer component 170 is provided with windows 171 at positions facing the first camera 120 and the second camera 130, such that the external ambient light can enter the first camera 120 and the second camera 130. The buffer component 170 is provided with a window at a position facing the linear laser emission apparatus 110, such that the laser emitted by the linear laser emission apparatus 110 can be emitted outward from the buffer component 170. The buffer component 170 is provided with a window at a position facing the return-to-pile positioning apparatus 190, such that the return-to-pile positioning apparatus 190 is enabled to receive and emit infrared signals, thereby ensuring the operation reliability of the linear laser module.

It can be understood that the buffer component 170 may be equivalent to a bumper plate of the device body 200. When the linear laser module is installed on the main body, the main body 140, on which the first camera 120, the second camera 130, and the linear laser emission apparatus 110 are assembled, is first installed on the device body 200, and then the buffer component 170 (such as the bumper plate) is connected to the main body 140 or the device body 200.

In some embodiments of the present disclosure, the buffer component 170 includes a bumper plate 172 and an elastic member. The bumper plate 172 and the main body 140 are connected by means of the elastic member. The linear laser module is located on the inner side of the bumper plate 172. The elastic member is disposed such that when the buffer component 170 collides with an obstacle, the force of the bumper plate 172 acting on the device body 200 and the linear laser module can be reduced to provide a certain buffering effect, which further reduces the damage of the obstacle to the device body and the linear laser module. The bumper plate 172 is provided with a rubber cushion outside, such that when the buffer component 170 collides with an obstacle, the rubber cushion is in direct contact with the obstacle. That is, the rubber cushion provides good protection to the bumper plate 172. Moreover, the rubber cushion is an elastic member, which can further provide a buffering effect. That is to say, the present disclosure allows the buffer component 170 to achieve a double-layer buffering effect by means of the elastic member and the rubber cushion, thereby greatly reducing the possibility of damages, caused by the obstacle, to the device body 200 and the linear laser module, and improving the reliability of the self-moving device. Specifically, the elastic component is an elastic column and/or a spring, and may also be another elastic member that meets the requirements.

In some embodiments of the present disclosure, the self-moving device further includes a fill-in light 180 and an ambient light sensor. The ambient light sensor is configured to detect the brightness of ambient light. The fill-in light 180 is disposed on the buffer component 170 and close to the window 171 corresponding to the second camera 130, such that when the ambient light is too weak to meet the requirement of the second camera 130 for clearly and accurately capturing an ambient image, that is, when the current ambient light does not meet the requirement of the second camera 130 for an exposure operation, the fill-in light 180 is used to fill the light so as to meet a shooting requirement of the second camera 130 and ensure that the second camera 130 can clearly and accurately capture the ambient image, thereby improving the accuracy of obstacle identification.

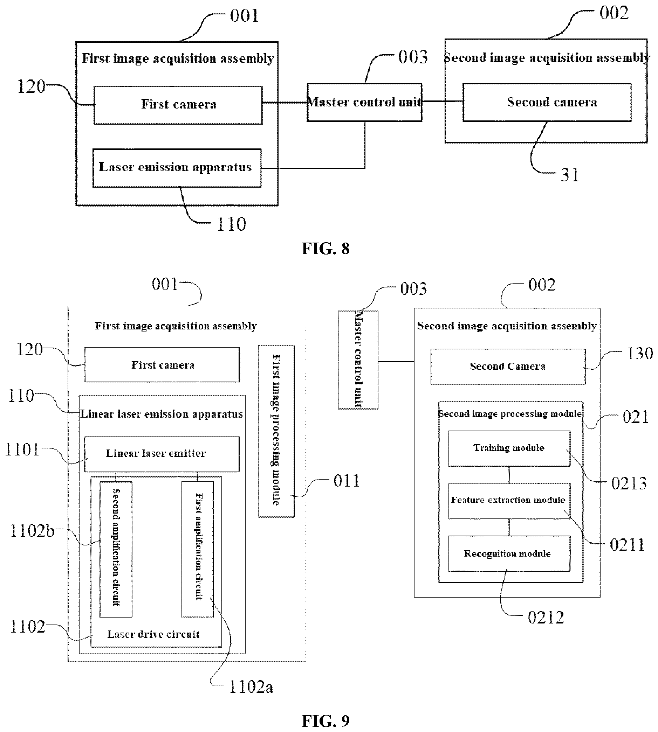

As shown in FIG. 8, the linear laser module includes the main body 140 and the first image acquisition assembly 001. The first image acquisition assembly 001 includes a first camera 120 disposed on the main body 140, at least one linear laser emission apparatus 110, and a first image processing module 011. The at least one linear laser emission apparatus 110 is located near the first camera 120, and is configured to emit a linear laser having a linear projection. The first camera 120 works in coordination with the at least one linear laser emission apparatus 110, and is configured to acquire the first ambient image. The first image processing module 011 is configured to acquire the obstacle distance information according to the first ambient image. The obstacle distance information represents a distance of the first camera from an obstacle when the first ambient image is taken. The at least one linear laser emission apparatus 110 is movably connected to the main body 140, and/or the main body 140 has a movable structure such that an azimuth angle and a rotation angle of the linear laser emission apparatus 110 are adjustable.

In the linear laser module provided by an embodiment of the present disclosure, the first camera 120 and the at least one linear laser emission apparatus 110 coordinate with each other, and are thus capable of identifying an obstacle or a terrain in front of the device body 200 for a corresponding obstacle avoidance operation or a cleaning operation. The azimuth angle and the rotation angle of the linear laser emission apparatus can be adjusted by movably connecting the linear laser emission apparatus to the main body 140 and by adjusting the position of the laser emission apparatus relative to the main body 140. The main body 140 has a movable structure, such that the azimuth angle and the rotation angle of the linear laser emission apparatus can be adjusted by adjusting the relative position of each component of the main body 140. In addition, the linear laser emission apparatus is movably connected to the main body 140 and the main body 140 has a movable structure, such that the azimuth angle and the rotation angle of the linear laser emission apparatus 110 can be adjusted by adjusting a position of the linear laser emission apparatus relative to the main body 140 and by adjusting the relative position of each component of the main body 140. Accordingly, when the linear laser emission apparatus 110 is assembled to the main body 140, it is convenient to adjust an irradiation angle and an irradiation range of the linear laser emitted by the linear laser emission apparatus 110, such that the linear laser emitted by the linear laser emission apparatus 110 is perpendicular to a horizontal plane and the linear laser is located in a field of view of the first camera 120. Such a structure helps to simplify an assembly operation and improve the assembly efficiency.

Further, the linear laser is allowed to be located in the field of view of the first camera 120 by reasonably adjusting the azimuth angle of at least one linear laser emission apparatus 110, thereby ensuring that the first camera 120 can accurately and comprehensively capture light rays emitted by the linear laser emission apparatus and reflected by an obstacle, and improving the accuracy and the comprehensiveness for the first camera 120 to acquire ambient images. It can be understood that after the azimuth angle of the at least one linear laser emission apparatus 110 disposed near the first camera 120 is adjusted, the linear laser emission apparatus is then fixed by dispensing an adhesive. The linear laser is allowed to be perpendicular to the horizontal plane by reasonably adjusting the rotation angle of the linear laser emission apparatus, thereby advantageously improving a ranging range.

The at least one linear laser emission apparatus 110 is movably connected to the main body 140, such that the azimuth angle and the rotation angle of the linear laser emission apparatus 110 can be adjusted by adjusting the position of the linear laser emission apparatus 110 relative to the main body 140. The main body 140 has a movable structure, such that the azimuth angle and the rotation angle of the at least one linear laser emission apparatus 110 can be adjusted by adjusting the relative position of each component of the main body 140. The at least one linear laser emission apparatus 110 is movably connected to the main body 140, and the main body 140 has a movable structure, such that the azimuth angle and the rotation angle of the at least one linear laser emission apparatus 110 can be adjusted by adjusting the position of the at least one linear laser emission apparatus 110 relative to the main body 140 and adjusting the relative position of each component of the main body 140. According to embodiments provided by the present disclosure, the azimuth angle and the rotation angle of the at least one linear laser emission apparatus 110 are adjusted in different ways, such that the requirements for different structures of the main body 140 and for different connections between the at least one linear laser emission apparatus 110 and the main body 140 can be met.

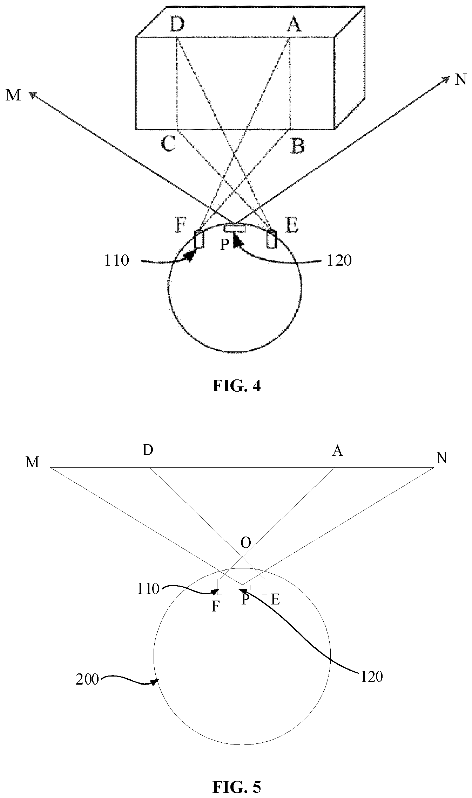

Further, the at least one linear laser emission apparatus 110 is configured to emit a linear laser having a linear projection. For example, the at least one linear laser emission apparatus emits a laser plane outwards. After the laser plane reaches an obstacle, a linear laser will be formed on the surface of the obstacle. An ambient image is acquired by means of the linear laser. A plane AOB shown in FIG. 1 characterizes a laser plane emitted by the linear laser emission apparatus 110, and the laser plane is a vertical plane. A plane ABF and a plane CDE shown in FIG. 4 characterize a laser plane emitted by a first linear laser emission apparatus 110 and a laser plane emitted by a second linear laser emission apparatus 111, respectively, where a line segment AB and a line segment CD characterize linear lasers. In some embodiments of the present disclosure, the linear laser emission apparatus may be a laser tube. It can be understood that the linear laser emission apparatus may also have another structure that meets the requirements, and the present disclosure does not make specific limitations thereto. It can be understood that a wavy lens may also be provided in an emission direction of each of the first linear laser emission apparatus 100 and the second linear laser emission apparatus 110 (for example, a traveling direction of the self-moving device). In some embodiments of the present disclosure, the wavy lens is a concave lens. For example, the concave lens is provided in front of the laser tube, and the laser tube emits light of a specific wavelength (such as infrared light), which passes through the concave lens and then becomes divergent light rays, thereby forming a straight line in a plane vertical to the light path.

As shown in FIG. 4 and FIG. 5, the linear laser module includes two linear laser emission apparatuses 110 disposed on both sides of the first camera 120 respectively, and the first camera 120 works in coordination with the linear laser emission apparatuses. That is, the two linear laser emission apparatuses 110 each emit a linear laser that is perpendicular to the horizontal plane and located in the field of view of the first camera 120. The first ambient image acquired by the first camera 120 is the linear lasers that are emitted by the two linear laser emission apparatuses and reflected by the obstacle. According to the first ambient image, the obstacle distance information may be acquired, and the distance between the obstacle and the device body 200 or the linear laser module may also be measured, thereby allowing a corresponding obstacle avoidance operation.

In an embodiment, the rotation angles and the azimuth angles of the two linear laser emission apparatuses 110 are adjusted by reasonably adjusting installation positions and installation angles of the two linear laser emission apparatuses 110 relative to the main body 140, and/or by adjusting the relative position of each component of the main body 140. In this case, the rotation angles of the two linear laser emission apparatuses 110 are adjusted such that the linear lasers are perpendicular to the horizontal plane; the azimuth angles of the two linear laser emission apparatuses 110 are adjusted; and the angles between the linear lasers emitted by the two linear laser emission apparatuses and an optical axis of the first camera 120 are adjusted, thereby allowing the linear lasers to be located in the field of view of the first camera 120. Then, the azimuth angles of the linear laser emission apparatuses 110 located on both sides of the first camera 120 are adjusted; an intersection point of the linear lasers, emitted by the linear laser emission apparatuses 110 on both sides, within the field of view of the first camera 120 is determined; and then, an adhesive is dispensed to fix the linear lasers on both sides, such that a distance from an obstacle in front of the device body 200 can be further measured.

In an embodiment of the present disclosure, as shown in FIG. 4, it is a schematic diagram of an operation principle of a linear laser generator. Here, the letter P represents the first camera 120, and the letters E and F represent the linear laser generators 110 located on both sides (or peripheral sides) of the first camera 120. The straight lines PM and PN represent two boundaries of a horizontal field of view of the first camera 120, that is, LMPN represents a horizontal field-of-view angle of the first camera 120. The first linear laser emission apparatus 100 emits a laser plane FAB outwards, the second linear laser emission apparatus 110 emits a laser plane ECD outwards, and the laser planes FAB and ECD form linear lasers, i.e., the line segments AB and CD shown in FIG. 4, on the surface of the obstacle after reaching the obstacle. Since the line segments AB and CD of the linear lasers emitted by the linear laser generators are located in the field of view of the first camera, the linear lasers may help detect a profile, height and/or width of an object within the field of view of the first camera, and the first camera 120 may acquire a first ambient image detected by the linear lasers.

Further, the master control unit 003 is configured to transmit an operation instruction to the first image acquisition assembly 001. For example, the master control unit 003 may calculate a distance from the linear laser module or the device body 200, where the linear laser module is located, to an obstacle ahead according to the first ambient image acquired by the first camera 120. For example, a triangulation ranging method may be used to calculate the distance from the linear laser module or the device body 200 to the obstacle ahead. In an embodiment of the present disclosure, as shown in FIG. 5, it is a schematic diagram from one perspective of the embodiment shown in FIG. 4. Here, the letter P represents the first camera 120, and the letters E and F represent the linear laser emission apparatuses 110 located on both sides of the first camera 120. The point A represents a projection of a line segment AB in the horizontal plane, and the point D represents a projection of a line segment CD in the horizontal plane. LMPN represents the horizontal field-of-view angle of the first camera 120. The point O represents an intersection point between the linear laser emitted by the linear laser emission apparatus 110 and an optical axis of the first camera 120. Taking the second linear laser generator 110 located at the point F as an example, when the linear laser emission apparatus 110 and the first camera 120 are fixedly installed to the main body 140, a focal length of the first camera 120 is known, and an emission angle of the linear laser generator F is known. That is, an included angle between a straight line FA and an optical axis PO is known, and the length of a line segment OP is known. A distance between the second linear laser generator 110 and an image plane of the first camera 120 is known, and an image, of the point A on the obstacle, in the first ambient image acquired by the first camera 120 is defined as A'. Since the point A' is somewhat offset with respect to the optical axis PO of the first camera 120, and the offset is known, a distance between A and F can be measured according to a triangle similarity principle combined with the above known conditions. That is, the distance between the obstacle and the linear laser emission apparatus 110 can be obtained. It can be understood that a terrain condition ahead may also be determined according to a deformation characteristic of a line segment, which is acquired by the first camera 120, of the linear laser reflected by an obstacle, thereby determining what operation to perform, for example, performing an obstacle avoidance operation or continuing a cleaning operation.

In some possible embodiments provided by the present disclosure, the number of the first camera 120 is not specifically limited. For example, there may be one, two, or three first cameras 120, or an additional number of first cameras that meet the requirements. It can be understood that in embodiments of the present disclosure, the number of linear laser emission apparatuses 110 is not specifically limited. For example, there may be two or more linear laser emission apparatuses 110. The number of the linear laser emission apparatuses 110 distributed on each side of the first camera 120 is also not limited, and there may be one, two, or more linear laser emission apparatuses 110 on each side of the first camera 120. In addition, the number of the linear laser emission apparatuses 110 on either side of the first camera 120 may be the same or different. It can be understood that when there is a plurality of linear laser emission apparatuses 110 on either side of the first camera 120, the plurality of linear laser emission apparatuses 110 may be distributed left and right, or vertically, and the present disclosure does not make specific limitations thereto.

Further, in some possible embodiments, the first camera 120 may allow the measurement of the distance from an obstacle in front of the device body 200 to acquire obstacle distance information, and may also identify the type of the obstacle to obtain obstacle type information. For example, based on the difference in timing, the first camera 120 is used to measure the distance from the obstacle and identify the type of the obstacle. By way of example, the master control unit 003 first determines the type of an obstacle according to a first ambient image acquired by the first camera 120, and determines, according to the type of the obstacle, whether the device body 200 needs to perform an obstacle avoidance operation. When the device body 200 needs to perform the obstacle avoidance operation, the master control unit 003 determines a distance from the obstacle according to a second ambient image acquired by the first camera 120, to obtain obstacle distance information for the corresponding obstacle avoidance operation. When the device body 200 does not need to perform the obstacle avoidance operation, the self-moving device continues a previous operation, thereby reducing the possibility of a false obstacle avoidance operation for the self-moving device.

In some embodiments according to the present disclosure, as shown in FIG. 1, the linear laser emission apparatus 110 is movably connected to the main body 140, and the main body 140 has a movable structure. In some embodiments of the present disclosure, the main body 140 includes a body 141 and a connection member 143. The first camera 120 is disposed on the body 141. The linear laser emission apparatuses 110 are connected to the body 141 by means of the connection member 143. Here, the connection member 143 is provided with a through hole, through which the linear laser emission apparatus 110 is disposed in a penetrative way in the connection member 143. The linear laser emission apparatus 110 is rotatably connected to the connection member 143. That is, the linear laser emission apparatus 110 is rotatable in the through hole of the connection member 143, such that a rotation angle of the linear laser emission apparatus 110 can be adjusted to allow a linear laser to be perpendicular to the horizontal plane, thereby expanding the ranging range. The connection member 143 is movably connected to the body 141. For example, the connection member 143 is horizontally rotatable relative to the body 141. That is, the axis of rotation of the connection member 143 relative to the body 141 is a straight line in a vertical direction, such that the connection member 143 drives the linear laser emission apparatus 110 to rotate in the horizontal plane relative to the body 141, and the azimuth angle of the linear laser emission apparatus 110 can be adjusted, thereby allowing the linear laser emitted by the linear laser emission apparatus 110 to be located in the field of view of the first camera 120.

It can be understood that since the linear laser emission apparatus 110 is rotatable relative to the connection member 143, and the connection member 143 is movable relative to the body 141, the rotation angle of the linear laser emission apparatus 110 can be adjusted in an assembly process by rotating the linear laser emission apparatus 110 in the through hole of the connection member 143 to an appropriate position. That is, the adjustment to the linear laser emission apparatus 110 is achieved. The azimuth angle of the linear laser emission apparatus 110 may be adjusted by rotating the connection member 143 relative to the body 141 to an appropriate position. That is, the adjustments to the linear laser emission apparatus 110 and the first camera 120 are achieved with a simple operation. It can be understood that after the rotation angle and the azimuth angle of the linear laser emission apparatus 110 are adjusted, the connection member 143, the body 141, and the linear laser emission apparatus 110 can be fixedly connected by fixing means. For example, an end portion 142, the body 141, and the linear laser emission apparatus 110 may be fixed by using a binder, glue, etc., thereby achieving simplicity in operation.

In an embodiment of the present disclosure, further, the body 141 is provided with a positioning slot 144, the connection member 143 is provided with a convex structure 145 adapted to the positioning slot 144, and the connection member 143 rotates horizontally in the positioning slot 144 by means of the convex structure 145. For example, the convex structure 145 is convex in the vertical direction, such that the connection member 143 is rotatable horizontally relative to the body 141. That is, the axis of rotation of the connection member 143 relative to the body 141 is a straight line in the vertical direction. Therefore, the convex structure 145 of the connection member 143 rotates horizontally in the positioning slot 144 of the body 141, and the linear laser emission apparatus 110 can be driven to rotate relative to the body 141 by taking the convex structure 145 as the axis of rotation. Thus, the linear laser emitted by the linear laser emission apparatus 110 is located in the field of view of the first camera 120, thereby rendering debugging of the linear laser generator 110 and the first camera 120. Accordingly, simple structure and convenience in operation are achieved. It can be understood that the positioning slot 144 may be a circular positioning slot, the convex structure 145 is a cylindrical convex structure, and the circular positioning slot and the cylindrical convex structure are coordinated to advantageously improve the flexibility and the reliability in the rotation of the connection member 143 relative to the body 141. It can be understood that the positioning slot 144 may also have a structure with other shape that meets the requirements.

In some embodiments of the present disclosure, as shown in FIG. 1, the linear laser emission apparatus 110 is cylindrical and is provided with a first step structure 111 on an outer peripheral side. The main body 140 is provided with an installation slot configured for installation of the linear laser emission apparatus 110, and an inner wall of the installation slot is provided with a second step structure 149. The first step structure 111 and the second step structure 149 are adapted such that the movement of the linear laser emission apparatus 110 along an axis direction can be limited, thereby advantageously improving the assembly efficiency.

In some embodiments of the present disclosure, the linear laser emission apparatus 110 is movably connected to the main body 140, and the main body 140 has a movable structure. As shown in FIG. 2, the main body 140 includes the body 141 and end portions 142 located on both sides of the body 141; the first camera 120 is disposed on the body 141; and the linear laser emission apparatuses 110 are disposed on the end portions 142. In some embodiments of the present disclosure, each end portion 142 is pivotally connected to, for example, articulated with, the body 141, such that the end portion 142 is rotatable relative to the body 141. Each linear laser emission apparatus 110 is rotatably connected to the end portion 142. For example, each linear laser emission apparatus 110 is cylindrical, and is rotatable relative to an installation slot in the end portion 142, such that the rotation angle of the linear laser emission apparatus 110 can be adjusted to allow the linear laser to be perpendicular to the horizontal plane, thereby expanding the ranging range. Since each linear laser emission apparatus 110 is installed to the end portion 142 which is rotatable relative to the body 141, the azimuth angle of the linear laser emission apparatus 110 can be adjusted to allow the linear laser emitted by the linear laser emission apparatus 110 to be located in the field-of-view angle of the first camera 120.

It can be understood that since the linear laser emission apparatus 110 is rotatable relative to the end portion 142 which is pivotally connected to the body 141, the rotation angle of the linear laser emission apparatus 110 can be adjusted in an assembly process by rotating the linear laser emission apparatus 110 to an appropriate position. That is, the adjustment to the linear laser emission apparatus 110 is achieved. The azimuth angle of the linear laser emission apparatus 110 can be calibrated by rotating the end portion 142 to an appropriate position relative to the body 141. That is, the coordinated calibration to the linear laser emission apparatus 110 and the first camera 120 is achieved with simple operation and convenient installation. It can be understood that after the adjustments to the rotation angle and azimuth angle of the linear laser emission apparatus 110 are completed, the end portion 142, the body 141, and the linear laser emission apparatus 110 can be fixedly connected by fixing means. For example, the end portion 142, the body 141, and the linear laser emission apparatus 110 can be fixed by using a binder, glue, etc., thereby achieving simplicity in operation.

In some embodiments of the present disclosure, the linear laser emission apparatus 110 is movably connected to the main body 140. For example, the main body 140 is provided with an installation cavity configured for installation of the linear laser emission apparatus 110, which is movably disposed in the installation cavity. The installation cavity includes a first end and a second end, and a cross-sectional area of the first end is smaller than a cross-sectional area of the second end. That is, the installation cavity has a flared structure. The cross-sectional area of the first end is greater than the cross-sectional area of the linear laser emission apparatus 110, indicating that the linear laser emission apparatus 110 can move in the installation cavity. Here, a front end of the linear laser emission apparatus 110 is close to the first end of the installation cavity, and the linear laser emission apparatus 110 rotates relative to the axis of the installation cavity. Thus, the rotation angle of the linear laser emission apparatus 110 can be adjusted to allow the linear laser to be perpendicular to the horizontal plane, thereby expanding the ranging range. A rear end of the linear laser emission apparatuses 110 rotates relative to the front end, such that the azimuth angle of the linear laser emission apparatus 110 can be adjusted to allow the linear laser emitted by the linear laser emission apparatus 110 to be located in the field-of-view angle of the first camera 120.

It can be understood that since the linear laser emission apparatus 110 is movably disposed in the installation cavity of the main body 140, the linear laser emission apparatus 110 may rotate in the installation cavity around the axis of the installation cavity or around a point (the front end), such that the rotation angle and the azimuth angle of the linear laser emission apparatus 110 can be calibrated in the adjustment process by reasonably adjusting installation angles and installation positions of the linear laser emission apparatus 110 and the main body 140. Accordingly, simplicity in operation and convenience in calibration are achieved. It can be understood that after the adjustments to the rotation angle and the azimuth angle of the linear laser emission apparatus 110 are completed, the linear laser emission apparatus 110 and the main body 140 can be fixedly connected by fixing means. For examples, the linear laser emission apparatus 110 can be fixed to the main body 140 by using a binder, glue, etc., thereby completing the assembly of the linear laser emission apparatus 110 and the main body 140. Accordingly, simplicity in operation is achieved.

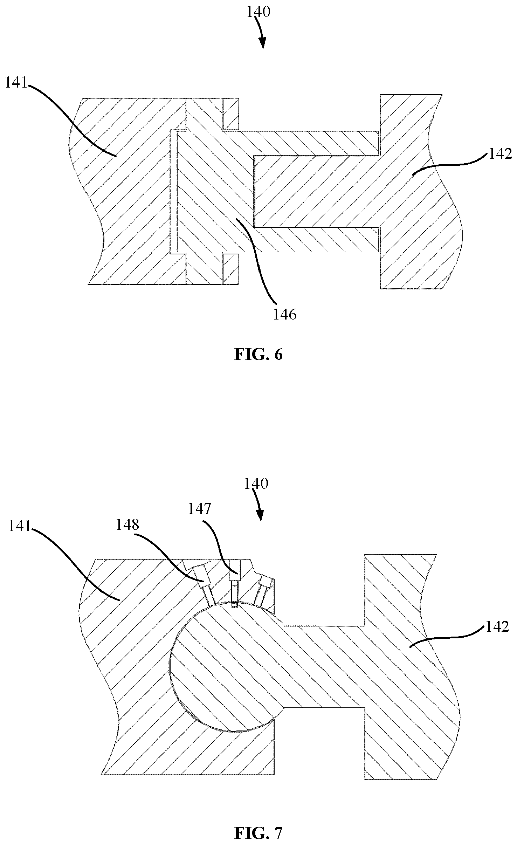

In some embodiments of the present disclosure, the main body 140 has a movable structure. As shown in FIG. 6, the main body 140 includes the body 141, the end portions 142, and the connection portions 146. The end portions 142 are located on both sides of the body 141; the first camera 120 is disposed on the body 141; and the linear laser emission apparatuses 110 are disposed on the end portions 142. For example, the linear laser emission apparatuses 110 are fixedly or detachably installed on the end portions 142. The connection portions 146 are pivotally connected to the body 141, and the end portions 142 are connected to the connection portions 146, such that the azimuth angles of the linear laser emission apparatuses 110 can be adjusted by pivoting the connection portions 146 relative to the body 141, thereby allowing the linear lasers emitted by the linear laser emission apparatuses 110 to be located in the field of view of the first camera 120. By rotatably connecting the end portion 142 with the connection portion 146, when the end portion 142 rotates relative to the connection portion 146, the rotation angle of the linear laser emission apparatus 110 can be adjusted to allow the linear laser to be perpendicular to the horizontal plane, thereby expanding the ranging range.

In some embodiments of the present disclosure, the connection portion 146 is articulated with the body 141, and is provided with a hole in a side facing the end portion 142; and the end portion 142 is provided with a cylindrical protrusion adapted to the hole. After the linear laser emission apparatus 110 is assembled to the end portion 142, the cylindrical protrusion of the end portion 142 is inserted into the hole, and rotates in the hole to adjust the rotation angle of the linear laser emission apparatus 110. After the linear laser becomes perpendicular to the horizontal plane, the end portion 142 and the connection portion 146 are fixed by using, for example, glue or other fixing structures, thereby enabling the debugging of the linear laser emission apparatus 110. Then, the position of the connection portion 146 relative to the body 141 is adjusted, such that the azimuth angle of the linear laser emission apparatus 110 can be adjusted. After the linear laser emitted by the linear laser emission apparatus 110 is located at a appropriate position within the field-of-view angle of the first camera 120, the body 141 and the connection portion 146 are fixed by using, for example, glue or other limiting structures, thereby enabling the calibration to an optical system formed by the linear laser emission apparatus 110 and the first camera 120. It can be understood that since the main body 140 has a movable structure, that is, the end portions 142 are movably connected to the body 141 by means of the connection portions 146, the rotation angles and the azimuth angles of the linear laser emission apparatuses 110 installed on the end portions 142 can be adjusted in a calibration process by reasonably adjusting the relative positions of the end portions 142, the connection portions 146, and the body 141. Accordingly, simplicity and convenience in operation are achieved. It can be understood that after the calibrations to the rotation angles and the azimuth angles of the linear laser emission apparatuses 110 are completed, the end portions 142, the connection portions 146, and the body 141 may be fixedly connected by fixing means. For example, the end portions 142, the connection portions 146, and the body 141 may be fixed by using a binder, glue, limit portions 147, etc., thereby achieving simplicity in operation.

In some embodiments of the present disclosure, the main body 140 has a movable structure. As shown in FIG. 7, in an embodiment of the present disclosure, the main body 140 includes the body 141, the end portions 142, and the limit portions 147. The end portions 142 are located on both sides of the body 141; the first camera 120 is disposed on the body 141; and the linear laser emission apparatuses 110 are disposed on the end portions 142. As shown in FIG. 7, the end portions 142 are rotatably connected to, for example, in balled connection with, the body 141, such that the end portions 142 may swing relative to the body 141, and may rotate relative to the body 141. The linear laser emission apparatus 110 is assembled to the end portion 142, and may in turn swing and rotate relative to the body 141 by means of the end portion 142, such that the azimuth angle and the rotation angle of the linear laser emission apparatus 110 can be adjusted. Accordingly, simplicity in operation and convenience in calibration are achieved.

In some embodiments of the present disclosure, the end portions 142 are in balled connection with the body 141, which is provided with limit holes 148; and the limit portions 147 are set bolts. The rotation angle of the linear laser emission apparatus 110 is adjusted by rotating the end portion 142 relative to the body 141. When the linear laser becomes perpendicular to the horizontal plane, the calibration to the linear laser emission apparatus 110 may be achieved. The azimuth angle of the linear laser emission apparatus 110 may be adjusted by adjusting the swing position of the end portion 142 relative to the body 141. When the linear laser emitted by the linear laser emission apparatus 110 is located at an appropriate position within the field-of-view angle of the first camera 120, the regulations to the linear laser emission apparatus 110 and the first camera 120 may be achieved. Then, the position of the end portion 142 relative to the body 141 is limited and fixed by penetrating the set bolts through the limit holes 148, thereby fixing the end portion 142 and the body 141. Accordingly, simplicity in operation is achieved. It can be understood that the number of the limit holes 148 in the body 141 may be one, two, or more, and different numbers of limit holes 148 are provided according to different positions of the limit holes 148, so as to meet the requirements for rotating the end portion 142 relative to the body 141 to different positions, in which case the end portion 142 and the body 141 can be fixed by means of the set bolts and the limit holes 148. Here, the set bolts may also be elastic members. That is, one end of the set bolt butted against the corresponding end portion 142 is an elastic member, and the end portion 142 and the body 141 are reliably connected by elasticity. It can be understood that a spherical surface of the end portion 142 may also be provided with a positioning hole adapted to the set bolt, such that the set bolt passes through the limit hole 148, matches the positioning hole and then is pressed, thereby advantageously improving the reliability of the fixed connection between the end portion 142 and the body 141.

In some embodiments of the present disclosure, the linear laser module includes two linear laser emission apparatuses. In this case, the main body includes two end portions, and further includes two connection portions, which connect the two end portions to the main body, respectively. The two linear laser emission apparatuses are disposed on the two end portions, respectively. For the details about connecting each of the two end portions to the main body by means of one connection portion, references may be made to the description above, and these details will not be repeated here.

In some embodiments of the present disclosure, as shown in FIG. 9, the linear laser emission apparatus 110 includes a linear laser generator 1101 and a laser drive circuit 1102. The laser drive circuit 1102 may receive a drive signal, and drive, according to the drive signal, the linear laser generator 1101 to generate a linear laser.

Further, the laser drive circuit 1102 may include an amplification circuit, which is configured to amplify the drive signal and transmit the amplified drive signal to the linear laser generator 1101 to allow the linear laser generator 1101 to emit light. In some embodiments of the present disclosure, the drive signal may include a control signal and a regulation signal. By means of the control signal, the on or off state of the linear laser generator 1101 may be controlled. By means of the regulation signal, the power of laser generated by the linear laser generator 1101 may be regulated.

In some embodiments of the present disclosure, as shown in FIG. 9, the amplification circuit may include a first amplification circuit 1102a and a second amplification circuit 1102b.

The first amplification circuit 1102a is configured to receive a control signal transmitted by the master control unit 003, amplify the control signal, and then transmit the amplified control signal to the linear laser generator 1101 to control the on or off state of the linear laser generator 1101.

The second amplification circuit 1102b is configured to receive the regulation signal transmitted by the master control unit 003, amplify the regulation signal, and then transmit the amplified regulation signal to the linear laser generator 1101 to control an emission power of the linear laser generator 1101.

The specific structures of the first amplification circuit 1102a and the second amplification circuit 1102b are not specially limited herein, as long as the signal amplification function can be achieved.

In some embodiments of the present disclosure, as shown in FIG. 8 and FIG. 9, the linear laser module further includes a second image acquisition assembly 002. The second image acquisition assembly 002 includes a second camera 130 and a second image processing module 021, which are disposed on the main body 140. The second camera 130 is configured to capture a second ambient image. The second image acquisition assembly 002 may be connected to the master control unit 003, and receive an operation instruction from the master control unit 003. By way of example, the second camera 130 is connected to the master control unit 003 of the self-moving device. The master control unit 003 can control the exposure of the second camera 130. The second camera 130 acquires a second ambient image according to an exposure instruction of the master control unit. The master control unit analyzes and processes the second ambient image, such that the type of the obstacle can be identified.

In some embodiments of the present disclosure, the first camera 120, the second camera 130, and the linear laser emission apparatus 110 work in coordination, for identifying obstacle distance information according to the first ambient image acquired by the first camera 120, and identifying obstacle type information according to the second ambient image acquired by the second camera 130. Therefore, the type of the obstacle may be determined according to the second ambient image captured by the second camera 130; and whether the device body 200 needs to perform an obstacle avoidance operation may be determined according to the type of the obstacle. When the device body 200 needs to perform the obstacle avoidance operation, the first camera 120 and the linear laser emission apparatus 110 coordinate with each other to determine the distance from the obstacle for the corresponding obstacle avoidance operation. When the device body 200 does not need to perform the obstacle avoidance operation, a previous operation is continued, thereby reducing the possibility of falsely carrying out the obstacle avoidance operation by the self-moving device.

In some embodiments of the present disclosure, there is a plurality of second ambient images, for example, 500 or 1000 second ambient images, or other quantities of second ambient images that meet the requirements. For example, the number of the second ambient images may be determined by adjusting the exposure frequency of the second camera 130. The master control unit segments a plurality of second ambient images taken by the second camera 130 to obtain segmented images marked with obstacle type information. After that, the segmented images are input to a trained obstacle model; then a feature extraction operation is performed on the segmented images; a confidence matching operation is performed between the extracted feature information and the trained obstacle model; and the type of the obstacle is determined according to a confidence matching result.

That is, the linear laser module provided by the embodiments of the present disclosure may determine the type of the obstacle by means of the second ambient images acquired by the second camera 130, thereby enabling the self-moving device to determine, according to the type of obstacle, to perform the obstacle avoidance operation or to perform the previous operation. When the obstacle avoidance operation needs to be performed, the device control module controls the first camera 120 and the linear laser emission apparatus 110 to work in coordination, and determines a distance between the obstacle and the linear laser module or the device body 200 according to the first ambient image acquired by the first camera 120, thereby performing the obstacle avoidance operation.

For example, when the obstacle is determined to be a balloon according to the second ambient image captured by the second camera 130, the balloon due to its light weight can be driven to move as the drive system drives the device body 200 to move. That is, the balloon does not affect a cleaning path. Therefore, a controller controls the device body 200 to perform the cleaning operation according to an original cleaning path, without performing any obstacle avoidance operation, such that the position where the balloon is located can be cleaned and the accuracy of obstacle avoidance can be improved, thereby advantageously expanding the cleaning range. That is, in this case, the controller does not need to control the linear laser emission apparatus 110 and the first camera 120 to work.

For another example, the obstacle is determined to be a chair according to the second ambient image captured by the second camera 130. Due to the large weight of the chair, if the cleaning operation is performed according to the original cleaning path, the device body 200 will collide with the chair thereby leading to the possibility of damage. That is, the chair affects the cleaning path. Therefore, the device control module controls the device body 200 to perform the obstacle avoidance operation so that the cleaning path is changed. That is, the device control module controls the linear laser emission apparatus 110 to work and emit a linear laser. The first camera 120 captures a first ambient image of light rays reflected from the chair. The device control module determines the distance between the chair and the linear laser module or the device body 200 according to the first ambient image, and then re-plans the cleaning path according to the distance to perform the obstacle avoidance operation, thereby improving the obstacle avoidance effect.

Further, in an embodiment of the present disclosure, the number of the second cameras 130 is not specifically limited. For example, there may be one, two, or three second cameras 130, or other quantities of second cameras that meet the requirements. It can be understood that the second camera 130 may be a monocular camera or a binocular camera. In some possible embodiments, the first camera 120 and the second camera 130 are separately disposed, or the first camera 120 and the second camera 130 may also form a camera module. A setting mode for the first camera 120 and the second camera 130 is not specifically limited in the present disclosure.

In some embodiments of the present disclosure, an optical axis of the first camera intersects downward with a horizontal direction, and an optical axis of the second camera intersects upward with the horizontal direction. That is, the first camera looks down at a surface to be cleaned from above, and such an arrangement is intended to catch the sight of lower obstacles. The second camera looks up from below, in order to catch the sight of more spatial features and enhance the user's video experience. The optical axis of the first camera has an included angle of 7 degrees with respect to the horizontal direction. The optical axis of the second camera has an included angle of 5 degrees with respect to the horizontal direction. That is, the second camera looks up from below, in order to catch the sight of more spatial features and enhance the user's video experience.

In some embodiments of the present disclosure, the main body may include a first end, a second end, and a connection portion connecting the first end and the second end. The linear laser module includes two laser emission apparatuses disposed on the first end and the second end, respectively. The first camera and the second camera are disposed on the connection portion.

In some embodiments of the present disclosure, the first camera 120 is a monochromatic camera, that is, an infrared camera, a first filter lens is disposed in front of the monochromatic camera, and the first filter lens may be an infrared lens, which only allows infrared light to pass through. It can be understood that the linear laser emission apparatus 110 working in coordination with the first camera 120 is an infrared laser tube that emits an infrared laser. The second camera 130 is an RGB camera, a second filter lens is disposed in front of the RGB camera, and the second filter lens is a visible light lens. For example, the visible light lens is a white light lens which only allows visible light to pass through. It can be understood that the first camera 120 and the second camera 130 may also have other structures that meet the requirements, and the present disclosure does not make specific limitations thereto.

In some embodiments of the present disclosure, the first camera 120 and the second camera 130 are arranged side by side along a horizontal direction. That is, the first camera and the second camera 130 are arranged left and right. For example, the first camera 120 is located on the left side of the second camera 130, or the first camera 120 is located on the right side of the second camera 130. Such a structure advantageously reduces the span in the vertical direction of the linear laser module, and is applicable to the device body 200 with a small size in the vertical direction, thereby expanding the product's scope of use. It can be understood that in this case, the linear laser emission apparatuses 110 are arranged on both sides of the first camera 120 and the second camera 130. That is, the first camera 120 and the second camera 130 are located between the linear laser emission apparatuses 110 on both sides.

In some embodiments of the present disclosure, the first camera 120 and the second camera 130 are arranged side by side along a vertical direction. That is, the first camera and the second camera 130 are arranged vertically. For example, the first camera 120 is located above the second camera 130, or the first camera 120 is located below the second camera 130. Such a structure advantageously reduces the span in the horizontal direction of the linear laser module, and is applicable to the device body 200 with a small size in the horizontal direction, thereby expanding the product's scope of use. It can be understood that in this case, the linear laser emission apparatuses 110 are arranged on both sides of the first camera 120 and the second camera 130. That is, the first camera 120 and the second camera 130 are located between the linear laser emission apparatuses 110 on both sides.

Further, the main body 140 includes the body 141 and the end portions 142 located on both sides of the body 141. The first camera 120 and the second camera 130 are assembled on the body 141. The linear laser emission apparatuses 110 are assembled on the end portions 142. The rotation angle and the azimuth angle of the linear laser may be adjusted by movably connecting the linear laser emission apparatus 110 to the end portion 142 and allowing the linear laser emission apparatus to rotate and swing relative to the end portion 142.

In some embodiments of the present disclosure, as shown in FIG. 9, the second image processing module 021 may include a feature extraction module 0211 and an identification module 0212.

The feature extraction module 0211 is configured to perform a feature extraction operation on the second ambient image to obtain feature information. The identification module 0212 is configured to input the feature information into an obstacle identification model to identify the obstacle type information.

By way of example, grayscale information and position information of pixels, which meet certain conditions, in the second ambient image may be used as the feature information. For example, the second ambient image may be pre-processed by the feature extraction module 0211. For example, the second ambient image is binarized, etc. Then, the grayscale information and the position information of each pixel in the pre-processed second ambient image are acquired. A preset grayscale range is then compared with the grayscale information of each pixel to obtain the grayscale information in the grayscale range and the position information of the corresponding pixel, for using as the feature information.

It is noted that the feature information may also be extracted from the second ambient image by other means, which are not specially limited herein.

The obstacle identification model may be obtained by training on samples of obstacle images in advance, and may be a neural network model, or a classifier or other models, as long as it may determine, according to the feature information, whether an obstacle exists in the second ambient image. A method for training the obstacle identification model and a specific working process for determining whether an obstacle exists are not specially limited herein. The obstacle in the present disclosure may be a paper scrap, a book, a table leg, a door, a refrigerator, a curtain, etc., which are not enumerated one by one here.

The identification module 0212 may identify the obstacle type information by entering the feature information into an obstacle classification model when determining the presence of an obstacle in the second ambient image.

The obstacle classification model may be obtained by training on samples of obstacle classes in advance, and may be a neural network model, or a classifier or other models, as long as it may determine, according to the feature information, the type of an obstacle. A method for training the obstacle identification model and a specific working process for determining the type of an obstacle are not specially limited herein. Accordingly, the second image processing module 021 further includes a training module 0213 configured to generate the obstacle identification model by using the acquired training data.

The obstacle type information indicates whether an obstacle needs to be cleaned and whether it can be crossed over. In the present disclosure, obstacles may be classified into three types according to the sizes of obstacles. The following are examples.

The first type of obstacles may be obstacles that can be crossed over and can be cleared, for example, paper scraps.

The second type of obstacles may be obstacles that cannot be crossed over but need to be cleared, for example, books.

The third type of obstacles may be obstacles that cannot be crossed over and do not need to be cleared, for example, doors, walls, or table legs. In some embodiments of the present disclosure, if an obstacle is detected only in one of the first and second ambient images, the identification result is that no obstacle exists. For example, if no obstacle distance information is detected from the first ambient image, or no obstacle type information is detected in the second ambient image, it is determined that no obstacle exists.

If an obstacle exists in both the first and second ambient images, the identification result is that an obstacle exists. Here, the type of the obstacle may be determined according to the second ambient image. For example, the obstacle distance information is received, and the presence of an obstacle is determined from the obstacle type information.

In the case of the first type of obstacles, the device control module may control the self-moving device to continue moving according to a current moving path and clear the obstacle.

In the case of the second and third types of obstacles, the position information of an obstacle may be obtained according to the obstacle distance information; steering distance information, steering direction information, and steering angle information of the self-moving device may be determined by the device control module, so as to re-plan the moving path, i.e., plan an obstacle avoidance path; and then, the self-moving device is controlled to perform the obstacle avoidance operation according to the obstacle avoidance path, thereby avoiding the obstacle that cannot be cleared.

Further, in some embodiments of the present disclosure, the self-moving device may include an alarm device, which may be connected to the device control module. The device control module may control the alarm device to give an alarm in the form of at least one of sound and light. In the case of the second type of obstacles, the obstacle may be avoided by re-planning the moving path as described above, and furthermore, the alarm device may give a prompt, thereby reminding the user to clean the obstacle that cannot be cleared by the self-moving device in time, while avoiding the obstacle.

The present disclosure has been described by means of the above embodiments. But, it should be understood that the above embodiments are merely for exemplary and illustrative purposes, and are not intended to limit the present disclosure to the scope of the embodiments described. Furthermore, those skilled in the art may understand that the present disclosure is not limited to the above embodiments, and more variations and modifications can be made according to the teachings of the present disclosure. These variations and modifications shall fall within the scope of protection claimed by the present disclosure. The scope of protection of the present disclosure is defined by the appended claims and equivalent scopes thereof.

## Claims

1. A linear laser module, comprising:
a main body;
a first image acquisition assembly, disposed on the main body and comprising a first camera, at least one laser emission apparatus, and a first image processing module, wherein the laser emission apparatus is disposed near the first camera and is configured to emit a linear laser, having a linear projection, outwards from the main body, the first camera is configured to acquire a first ambient image including the linear laser, and the first image processing module is configured to acquire obstacle distance information according to the first ambient image; and
a second image acquisition assembly, comprising a second camera and a second image processing module, wherein the second camera is configured to acquire a second ambient image, and the second image processing module is configured to acquire obstacle type information according to the second ambient image.

2. The linear laser module according to claim 1, wherein the first image processing module acquires the obstacle distance information based on a triangulation ranging method.

3. The linear laser module according to claim 1, wherein the second image processing module comprises:
a feature extraction module, configured to perform a feature extraction operation on the second ambient image to acquire feature information; and
an identification module, configured to input the feature information into an obstacle identification model to identify the obstacle type information.

4. The linear laser module according to claim 3, wherein the second image processing module further comprises:
a training module, configured to generate the obstacle identification model by using training data.

5. The linear laser module according to claim 1, wherein the laser emission apparatus is configured to emit infrared light, the first camera is an infrared camera, and the second camera is an RGB camera.

6. The linear laser module according to claim 5, wherein
the first image acquisition assembly further comprises:
a first filter lens, disposed on a side of the first camera away from the main body, and configured such that only infrared light enters the first camera; and
the second image acquisition assembly further comprises:
a second filter lens, disposed on a side of the second camera away from the main body, and configured such that only visible light enters the second camera.

7. The linear laser module according to claim 1, wherein
the main body comprises a body, a first end, and a first connection portion configured to connect the first end to the body; and
the linear laser module comprises a first linear laser emission apparatus disposed on the first end, and the first camera and the second camera are disposed on the body.

8. The linear laser module according to claim 1, further comprising:
a return-to-pile positioning apparatus, disposed on the main body, and being in a communication connection with a charging pile.

9. The linear laser module according to claim 8, wherein the return-to-pile positioning apparatus comprises an infrared emission apparatus and at least two infrared reception apparatuses, the infrared emission apparatus being configured to transmit a first infrared signal to the charging pile, and the at least two infrared reception apparatuses being configured to receive a second infrared signal from the charging pile.

10. The linear laser module according to claim 1, further comprising a master control unit, wherein the first image acquisition assembly and the second image acquisition assembly are connected to the master control unit, and the master control unit is configured to transmit operation instructions to the first image acquisition assembly and the second image acquisition assembly.

11. The linear laser module according to claim 10, wherein the linear laser emission apparatus comprises:
a linear laser generator, configured to generate a linear laser; and
a laser drive circuit, connected to the master control unit, and configured to control the linear laser generator based on the operation instructions transmitted by the master control unit.

12. The linear laser module according to claim 11, wherein the laser drive circuit comprises:
a first amplification circuit, configured to receive a control signal transmitted by the master control unit, amplify the control signal, and transmit the amplified control signal to the laser generator to control an on or off state of the laser generator; and
a second amplification circuit, configured to receive a regulation signal transmitted by the master control unit, amplify the regulation signal, and transmit the amplified regulation signal to the laser generator to control generation power of the linear laser generator.

13. The linear laser module according to claim 1, wherein
a first optical axis of the first camera is tilted downward with respect to a horizontal direction, and a second optical axis of the second camera is tilted upward with respect to the horizontal direction.

14. The linear laser module according to claim 13, wherein
the first optical axis of the first camera has a first included angle of 7 degrees with respect to the horizontal direction, and the second optical axis of the second camera has a second included angle of 5 degrees with respect to the horizontal direction.

15. A self-moving device, comprising:
a device body;
the linear laser module according to claim 1, the linear laser module being disposed on the device body; and
a device control module, configured to control movement of the self-moving device according to the obstacle distance information and the obstacle type information.

16. The self-moving device according to claim 15, further comprising:
a buffer component, disposed on sides of the first and second image acquisition assemblies away from the main body, and having openings facing the first image acquisition assembly and the second image acquisition assembly, respectively, wherein
the buffer component is provided with fill-in lights located on peripheries of the openings.
